# DEMANDE DE BREVET EUROPEEN

(11) **EP 3 193 295 A1**
(43) Date de publication de la demande: **19.07.2017**
(21) Numéro de dépôt: 16178093.7
(22) Date de dépôt: 06.07.2016
(51) Int. Cl.: G06Q 20/32, G06Q 20/20, G06Q 20/34

(54) **CONTRÔLE D'APPLICATIONS DANS UN TERMINAL MOBILE**

(30) Priorité: 18.01.2016 FR 1650378
(71) Demandeur: PROTON WORLD INTERNATIONAL N.V., 1831 Diegem (BE); STMICROELECTRONICS (ROUSSET) SAS, 13790 Rousset (FR)
(72) Inventeur: VAN NIEUWENHUYZE, Olivier, 1970 Wezembeek-Oppem (BE); CHARLES, Alexandre, 13390 Auriol (FR)
(74) Mandataire: Thibon, Laurent

(57) **Abrégé**

L'invention concerne un procédé de contrôle de l'exécution d'une application de paiement par un terminal mobile (1), communiquant en champ proche avec un dispositif de paiement (2), comportant les étapes de : transmettre une requête de sélection d'application (SEND REQ(PART AID)) à destination du dispositif de paiement ; et vérifier l'identifiant (AID) d'application reçu du dispositif de paiement par rapport à une liste d'applications autorisées, la vérification étant effectuée par le circuit par lequel transite la requête de sélection d'application.

## Description

### Domaine

La présente description concerne de façon générale les circuits électroniques et, plus particulièrement, les terminaux mobiles de type téléphones mobiles ou portables. La présente description vise plus particulièrement de tels téléphones mobiles utilisés comme points de vente mobiles ("mobile Point Of Sale" - mPOS).

### Exposé de l'art antérieur

Le développement des téléphones mobiles équipés pour des communications en champ proche (Near Field Communication - NFC) a tout d'abord permis l'utilisation de ces téléphones à la manière des cartes de paiement ou de cartes d'accès. L'étape suivante est de pouvoir utiliser ces téléphones mobiles en terminaux de paiement, c'est-à-dire en point de vente mobile ou "mobile Point Of Sale" (mPOS). Le téléphone, par l'intermédiaire de son interface de communication sans contact (Contact Less Front end - CLF), opère en mode terminal et reçoit les informations d'une carte à microcircuit sans contact ou d'un autre dispositif mobile opérant en mode carte. Le téléphone remplit alors la fonction d'un terminal de paiement.

Toutefois, à la différence des terminaux de paiement dédiés qui n'hébergent généralement que des applications de paiements (on dira par la suite des applications bancaires), un téléphone mobile héberge diverses applications plus ou moins sécurisées.

Il existe donc un besoin de s'assurer de la sécurité des transactions lorsque le téléphone ou plus généralement le terminal mobile opère en point de vente.

### Résumé

Il serait souhaitable de disposer d'une solution pour vérifier la nature d'une application exécutée par un terminal mobile lorsque ce dernier opère en point de vente mobile.

Il serait souhaitable de disposer d'une solution compatible avec les cartes et applications de paiement existantes.

Il serait souhaitable de disposer d'une solution particulièrement adaptée à des transactions basées sur des communications sans contact.

Ainsi, un mode de réalisation prévoit un procédé de contrôle de l'exécution d'une application de paiement par un terminal mobile, communiquant en champ proche avec un dispositif de paiement, comportant les étapes de :
transmettre une requête de sélection d'application à destination du dispositif de paiement ; et
vérifier l'identifiant d'application reçu du dispositif de paiement par rapport à une liste d'applications autorisées, la vérification étant effectuée par le circuit par lequel transite la requête de sélection d'application.

Selon un mode de réalisation, l'exécution des applications de ladite liste est, par défaut, bloquée.

Selon un mode de réalisation, en cas d'échec de la vérification, le terminal mobile transmet au dispositif de paiement une information d'absence de compatibilité.

Selon un mode de réalisation, pour une application contenue dans ladite liste, ledit circuit par lequel transite la requête de sélection d'application n'autorise l'exécution que si la requête provient d'un élément de sécurité.

Selon un mode de réalisation, le dispositif est une carte à microcircuit.

Selon un mode de réalisation, la requête de sélection contient un identifiant partiel de l'application.

Selon un mode de réalisation, la liste des applications contient des identifiants d'applications de paiement.

Un mode de réalisation prévoit un terminal mobile programmé conformément au procédé ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique, un mode de réalisation d'un système de paiement sans contact utilisant un téléphone mobile ;
la figure 2 est un schéma-bloc simplifié d'un exemple d'interaction entre différents circuits d'un téléphone mobile exécutant une application de point de vente ;
la figure 3 illustre, de façon schématique, un mode de mise en oeuvre d'un procédé de validation d'une application de paiement ; et
la figure 4 illustre, de façon schématique, un autre mode de mise en oeuvre d'un procédé de validation d'une application de paiement.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, les échanges entre le terminal mobile et les serveurs de validation des opérations de type paiement ainsi que les protocoles d'échange d'informations entre le terminal et la carte n'ont pas été détaillés, les modes de réalisation décrits étant compatibles avec les échanges et protocoles usuels.

Les modes de réalisation sont décrits en prenant pour exemple un téléphone mobile et une carte à puce (ou carte à microcircuit). Ils s'appliquent toutefois plus généralement à tout dispositif utilisé en point de vente et à tout dispositif de paiement dans lesquels des problèmes similaires se posent. De plus, bien que l'on fasse référence à des applications de paiement, les modes de réalisation décrits se transposent à des applications de nature différente pourvu qu'elles engendrent les mêmes problèmes et soient compatibles avec les solutions décrites.

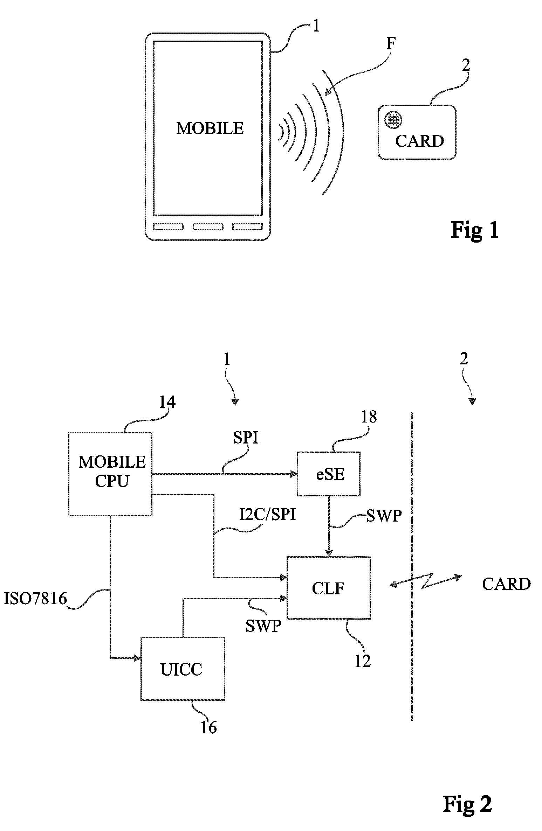

La figure 1 représente, de façon très schématique, un mode de réalisation d'un système de paiement sans contact utilisant un téléphone mobile 1 (MOBILE), du type auquel s'appliquent, à titre d'exemple, les modes de réalisation décrits.

Le téléphone mobile 1 est, de façon usuelle, équipé des circuits et applications de communication avec les systèmes de téléphonie mobile. Par ailleurs, le téléphone 1 est équipé de circuits et applications lui permettant de communiquer en champ proche, à la manière d'un transpondeur électromagnétique. En communication en champ proche, le téléphone peut fonctionner en mode carte pour servir, par exemple, de carte de paiement ou de contrôle d'accès en échangeant des informations avec un terminal.

Les téléphones mobiles 1 visés par la présente description peuvent également fonctionner en mode lecteur, c'est-à-dire émuler un terminal de communication en champ proche et générer un champ électromagnétique F pour communiquer avec, et le cas échéant alimenter, des circuits d'une carte à microcircuits 2 (CARD) ou d'un dispositif fonctionnant en mode carte.

Pour simplifier, on fera par la suite référence à une carte de paiement pour désigner la carte à microcircuits 2 ou le dispositif fonctionnant en mode carte et à un téléphone 1 pour désigner le téléphone ou terminal mobile servant de point de vente.

Un téléphone n'est pas un terminal de paiement sécurisé à la manière d'un "point de vente" ou "Point Of Sale" usuel. En effet, un téléphone mobile est généralement équipé d'un élément de sécurité intégré (embedded Secure Element - eSE) et/ou d'une carte à microcircuit (Universal Integrated Circuit Card) servant d'élément(s) de sécurité et ayant accès à l'interface de communication en champ proche (CLF) du téléphone. De plus, dans certaines applications, l'unité centrale (par exemple un microcontrôleur ou microprocesseur) du téléphone contrôle l'interface de communication en champ proche sans passer par ces éléments de sécurité. Or, pour opérer en point de vente, on doit s'assurer que l'interface est contrôlée par un élément de sécurité, de préférence un élément de sécurité dédié ou en variante, un mode de fonctionnement particulier de l'interface CLF pour s'assurer qu'une transaction de paiement s'effectue dans un environnement séparé.

Il existe donc un risque qu'une application malveillante, hébergée par le téléphone et ayant accès à l'interface de communication en champ proche, pirate la transaction de paiement opérée lorsque le téléphone est utilisé en point de vente.

La figure 2 est un schéma-bloc simplifié d'un exemple d'interaction entre différents circuits d'un téléphone mobile et d'une carte. Pour simplifier, seule une partie des circuits interagissant avec l'opération de paiement a été illustrée. En particulier, le téléphone est équipé d'un écran généralement tactile et/ou d'un clavier qui sont utilisés dans une opération de paiement et qui n'ont pas été illustrés.

L'interface de communication en champ proche 12 (CLF - Contact Less Front end) du téléphone est capable de générer le champ électromagnétique F (figure 1) pour communiquer et le cas échéant télé-alimenter la carte CARD.

Selon les applications exécutées par l'unité centrale 14 (MOBILE CPU) du téléphone, l'accès à l'interface 12 s'effectue :
directement, par exemple sur un bus de type I2C ou SPI ;
par l'intermédiaire d'une carte à microcircuit 16 (UICC - Universal Integrated Circuit Card) équipant le téléphone (dans ce cas, les échanges entre la carte 16 et l'interface 12 utilisent par exemple un protocole unifilaire de communication (SWP) tandis que les échanges entre l'unité 14 et la carte 16 utilisent un protocole normalisé ISO7816) ; ou
par l'intermédiaire d'un élément 18 de sécurité embarqué (eSE - embedded Secure Element) équipant le téléphone (dans ce cas les échanges entre l'élément 18 et l'interface 12 utilisent par exemple un protocole unifilaire de communication (SWP) tandis que les échanges entre l'unité 14 et l'élément 18 utilisent par exemple un bus de type SPI ou une émulation du protocole normalisé ISO7816).

Lorsque le téléphone peut fonctionner en point de vente, il comporte par exemple un élément de sécurité embarqué 18 hébergeant une application de point de vente mobile (mPOS), un mode de fonctionnement particulier de l'interface CLF ou autre. Une application particulièrement répandue est l'application EMV (Eurocard-Mastercard-Visa) à laquelle on fera, pour simplifier, référence par la suite. De même, pour simplifier on fera référence à une solution avec élément de sécurité embarqué mais tout ce qui est décrit par la suite se transpose aux autres solutions de contrôle d'applications de point de vente mobile.

Pour exécuter une opération de paiement, une requête de paiement REQ doit être envoyée par l'élément 18 par l'intermédiaire de l'interface 12. La carte 2 répond à cette requête en envoyant les données d'identification de l'application de paiement (téléphone 1) avec laquelle elle est compatible. En effet, le point de vente peut accepter plusieurs types de cartes de paiement, par exemple, Visa et Mastercard mais la carte 2 ne fonctionne que selon une application.

Selon les modes de réalisation décrits, on prévoit de faire exécuter, par le téléphone 1, des étapes de vérification afin d'autoriser ou d'interdire la poursuite de l'opération de paiement.

On aurait pu penser vérifier qu'une requête REQ de paiement provient de l'élément 18 par la liaison SWP et ne provient pas directement de l'unité 14 par la liaison I2C/SPI. Toutefois, dans certains téléphones, cette requête provient de l'unité centrale du téléphone. Par conséquent, une telle solution rendrait de nombreux téléphones incompatibles, même si l'opération de paiement elle-même est contrôlée par un élément de sécurité 18.

On prévoit de tirer profit du fait que les applications de paiement sont identifiables par un code ou identifiant d'application (AID - Application Identifier Data) et sont en nombre limité (de l'ordre d'une centaine). De plus, une carte de paiement (par exemple Visa) n'est compatible qu'avec un nombre limité voire unique d'applications de paiement. Par conséquent, il est possible de comparer l'identifiant d'application dans une liste stockée dans l'interface 12 ou dans l'élément 18.

On aurait pu penser, avant d'autoriser l'envoi d'une requête à la carte, comparer les identifiants d'application AID à une liste autorisée stockée dans l'élément 18. Toutefois, une difficulté est que, côté téléphone, l'identifiant complet n'est pas toujours connu, mais seule une partie de cet identifiant peut dans certains cas être comparée à une liste mémorisée. Or, opérer la vérification que sur une partie de l'identifiant peut conduire à bloquer des requêtes inutilement. En effet, en prenant l'exemple d'une transaction bancaire de type VISA dont la donnée d'identification AID serait arbitrairement "VISA", la donnée d'identification AID peut n'être diffusée par le téléphone qu'en partie, par exemple seulement "VI". Ainsi, afin de valider ou non l'application, si avant l'envoi de la requête le système bloque VI, on risque de se retrouver dans une situation dans laquelle une application VIxx, par exemple VIAB, VISP, etc., ne requérant aucun accès à l'application bancaire, se trouve bloquée.

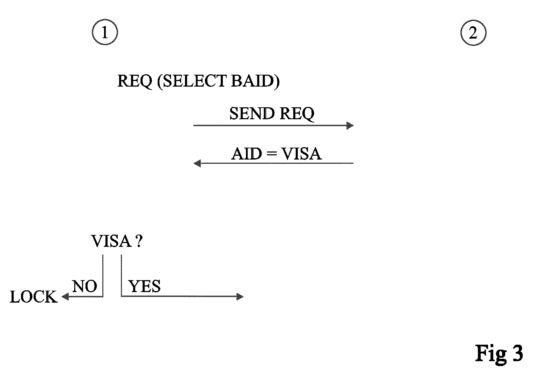

La figure 3 illustre, de façon schématique et sous forme de blocs, un mode de mise en oeuvre d'un procédé de contrôle d'authenticité d'une opération.

Lorsque le téléphone 1 génère une requête de paiement REQ, que ce soit par son unité centrale 14 ou par son élément de sécurité 18, cette requête est transmise (SEND REQ) à la carte 2.

Ainsi, selon les modes de réalisation de la présente description, la requête est dans tous les cas transmise (SEND REQ) à la carte 2.

Si la carte 2 n'est pas compatible avec un paiement, elle ne répond pas et la transaction s'arrête.

Si la carte 2 est compatible avec un paiement, elle répond en transmettant la donnée d'identification AID du type d'application avec lequel elle est compatible. Toutefois, à la différence du téléphone, la carte 2 transmet l'identifiant complet de l'application de paiement avec laquelle elle est compatible. En reprenant l'exemple d'un identifiant VISA, la carte 2 renvoie l'identifiant AID valant VISA et pas seulement VI.

Côté téléphone, l'interface 12 ou l'élément 18 compare l'identifiant reçu par rapport à une liste d'identifiants autorisés (VISA ?). Si l'identifiant est valide (YES), la transaction de paiement s'opère. Dans le cas contraire (NO), la transaction est bloquée (LOCK).

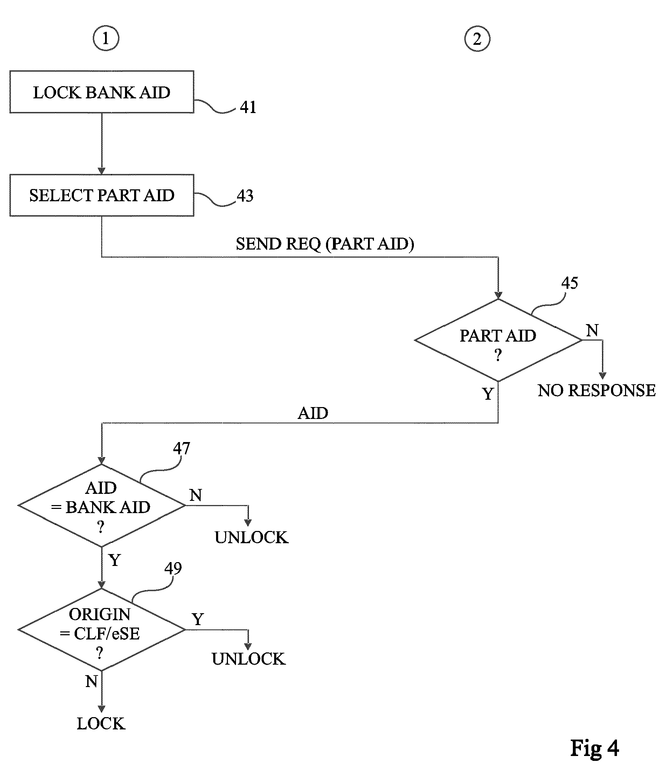

La figure 4 illustre un autre mode de mise en oeuvre préféré selon lequel le téléphone 1 ne vérifie pas les identifiants autorisés mais vérifie les identifiants interdits en cas de communication non filtrée par l'interface 12 ou par l'élément de sécurité 18.

Ainsi, par défaut, une application bancaire ne peut pas être exécutée par le téléphone. Les applications bancaires sont bloquées (verrouillées) par exemple par le circuit 12 (bloc 41, LOCK BANK AID).

Lorsqu'une application est sélectionnée par le téléphone, on suppose que la commande de sélection qui est envoyée à la carte ne contient qu'une partie de l'identifiant. Ainsi, une commande SELECT PART AID (bloc 43) est générée par le téléphone, soit par le circuit 12, le circuit 18 ou le circuit 14. Cette commande est envoyée sous forme d'une requête (SEND REQ(PART AID)) à la carte 2. En reprenant l'exemple VISA, l'identifiant partiel est par exemple VI. La requête est traitée normalement par la carte, c'est-à-dire que la carte 2 vérifie qu'elle héberge bien une application contenant cet identifiant partiel (bloc 45, PART AID ?). Dans la négative (sortie N du bloc 45), la carte ne répond pas (NO RESPONSE) ou renvoie un message d'erreur. Dans l'affirmative (sortie Y du bloc 45), la carte renvoie l'identifiant complet AID de l'application qu'elle héberge.

Ainsi, en supposant le cas d'une sélection d'une application bancaire de type VISA, si la carte n'est pas une carte VISA et qu'elle n'héberge pas d'application dont l'identifiant commence par VI, elle ne répond pas. Si, comme illustré, la carte 2 est bien une carte VISA, elle répond en envoyant l'identifiant complet AID=VISA.

Côté téléphone 1, le circuit en charge de la sélection de l'application, typiquement le circuit 12 CLF ou le circuit 18 par lequel transite la requête de sélection SELECT d'application, vérifie si l'identifiant complet AID est inclus dans la liste des applications bancaires (bloc 47, AID = BANK AID ?). Dans la négative (sortie N du bloc 47), l'application est autorisée (UNLOCK) quelle que soit l'origine (unité centrale 14, interface 12 ou élément de sécurité 18) de la commande de sélection SELECT. Ainsi, toute application qui a un identifiant partiel commun à une application bancaire mais qui n'en est pas une est autorisée. Si l'identifiant AID est contenu dans les listes des applications bancaires (sortie Y du bloc 47), le circuit (interface 12 ou élément de sécurité 18 selon les applications et les modèles de téléphones) par lequel transite la requête de sélection SELECT d'application vérifie si la commande de sélection (bloc 49, ORIGIN = CLF/eSE ?) vient bien d'un élément de sécurité.

Dans la négative (sortie N du bloc 49), l'application reste bloquée (LOCK). En cas de blocage de la requête par l'élément 12 ou 18, on adaptera de préférence la réponse à l'appelant afin de ne pas perturber le système. Par exemple, on renvoie un code d'erreur indiquant que l'identifiant AID n'existe pas. Selon un autre exemple, l'élément 12 ou 18 interdit toute commande (autre que code d'erreur) vers la carte distante tant qu'une commande de sélection n'aboutit pas. Cela revient, côté terminal mobile, à transmettre au dispositif de paiement une information d'absence de compatibilité.

Si la commande de sélection vient bien d'un élément de sécurité (sortie Y du bloc 49), le circuit (par exemple 12) contrôlant l'exécution des applications autorise l'exécution (UNLOCK).

Un avantage est que même en cas d'un identifiant partiel envoyé par le téléphone à la carte 2, lors de la réponse de la carte 2 avec l'identifiant complet, le circuit 12 ou 18 qui gère la requête n'autorise l'application bancaire que si la requête est venue du circuit 18.

Un avantage qu'il y a à effectuer la vérification depuis le téléphone et non depuis la carte est que cela permet de résoudre les problèmes d'absence de réponse qui peuvent autrement être nombreux.

Un autre avantage est que la solution décrite est compatible avec les cartes existantes et ne requiert aucune modification de celles-ci.

Divers modes de réalisation ont été décrits. Diverses variantes et modifications apparaîtront à l'homme de l'art. En particulier, les identifiants pris pour exemples sont arbitraires. Par ailleurs, bien que les modes de réalisation aient été plus particulièrement décrits en relation avec un exemple d'application à des transactions bancaires, ils se transposent à d'autres applications dans lesquelles des problèmes similaires se posent. En outre, la mise en oeuvre pratique des modes de réalisation qui ont été décrits est à la portée de l'homme du métier à partir des indications fonctionnelles données ci-dessus et en utilisant des circuits en eux-mêmes usuels.

## Revendications

1. Procédé de contrôle de l'exécution d'une application de paiement par un terminal mobile (1), communiquant en champ proche avec un dispositif de paiement (2), comportant les étapes de :
transmettre une requête de sélection d'application (SEND REQ ; SEND REQ(PART AID)) à destination du dispositif de paiement ; et
vérifier l'identifiant (AID) d'application reçu du dispositif de paiement par rapport à une liste d'applications autorisées, la vérification étant effectuée par le circuit par lequel transite la requête de sélection d'application.

2. Procédé selon la revendication 1, dans lequel l'exécution des applications de ladite liste est, par défaut, bloquée.

3. Procédé selon la revendication 1 ou 2, dans lequel en cas d'échec de la vérification, le terminal mobile transmet au dispositif de paiement une information d'absence de compatibilité.

4. Procédé selon l'une quelconque des revendications 1 à 3, dans lequel, pour une application contenue dans ladite liste, ledit circuit (12, 18) par lequel transite la requête de sélection d'application n'autorise l'exécution que si la requête provient d'un élément de sécurité (18).

5. Procédé selon l'une quelconque des revendications 1 à 4, dans lequel le dispositif est une carte à microcircuit.

6. Procédé selon l'une quelconque des revendications 1 à 5, dans lequel la requête de sélection contient un identifiant partiel de l'application.

7. Procédé selon l'une quelconque des revendications 1 à 6, dans lequel la liste des applications contient des identifiants d'applications de paiement.

8. Terminal mobile (1) programmé conformément au procédé selon l'une quelconque des revendications 1 à 7.
